(19) Europäisches Patentamt / European Patent Office / Office européen des brevets

(11) **EP 2 904 353 B1**

(12) **FASCICULE DE BREVET EUROPEEN**

(45) Date de publication et mention
de la délivrance du brevet:
**21.11.2018 Bulletin 2018/47**

(21) Numéro de dépôt: **13779311.3**

(22) Date de dépôt: **26.09.2013**

(51) Int Cl.:
*G01D 3/032* *(2006.01)*    *G05B 9/00* *(2006.01)*

(86) Numéro de dépôt international:
**PCT/FR2013/052266**

(87) Numéro de publication internationale:
**WO 2014/053747 (10.04.2014 Gazette 2014/15)**

(54) **PROCÉDÉ ET SYSTÈME DE MESURE À CAPTEURS MULTIPLES**

VERFAHREN UND SYSTEM FÜR MULTISENSORMESSSYSTEM

MULTI-SENSOR MEASURING SYSTEM METHOD AND SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.10.2012 FR 1259293**

(43) Date de publication de la demande:
**12.08.2015 Bulletin 2015/33**

(73) Titulaire: **Safran Aircraft Engines
75015 Paris (FR)**

(72) Inventeurs:
• **HOUEL, Jonathan M.**
**F-50500 Carentan (FR)**
• **LE GONIDEC, Serge**
**F-27200 Vernon (FR)**

(74) Mandataire: **Desormiere, Pierre-Louis et al
Cabinet Beau de Loménie
158, rue de l'Université
75340 Paris Cedex 07 (FR)**

(56) Documents cités:
WO-A1-97/07439    DE-A1-102010 023 387
FR-A1- 2 943 234    FR-A1- 2 972 528

**Description**

Domaine de l'invention

La présente invention concerne un procédé et un système de mesure à capteurs multiples d'une même grandeur physique.

Art antérieur

Lorsque l'on dispose d'un ensemble de capteurs destinés à la mesure d'une même grandeur physique, en vue de déterminer quelle est la meilleure mesure parmi les informations fournies par les différents capteurs, on procède généralement à une validation des mesures qui repose principalement sur des logiques à base de voteur où les mesures sont comparées entre elles.

Un inconvénient des techniques à base de voteur réside dans le fait que celles-ci doivent être adaptées au cas par cas selon le nombre de mesures disponibles et en fonction du type de mesure concerné. Dans le processus de mise à disposition du logiciel de régulation, il est nécessaire de faire des tests unitaires de chacune des fonctions. Ceci implique un coût de qualification relativement élevé et introduit des risques associés à la diversité des fonctions.

Objet et description succincte de l'invention

La présente invention a pour but de remédier aux inconvénients précités et plus particulièrement de réaliser une fusion des données provenant de capteurs quelconques, représentant la même grandeur physique, afin d'estimer la meilleure mesure possible tout en rejetant les biais présents sur certains capteurs, dus en particulier au bruit, à un saut de moyenne ou à la présence de capteurs hors service.

L'invention a ainsi pour but de mettre en oeuvre une procédure unique d'évaluation, quels que soient le type et le nombre de capteurs.

Ces buts sont atteints grâce à un système de mesure à capteurs multiples d'une même grandeur physique, caractérisé en ce qu'il comprend au moins un ensemble de n capteurs redondants ou de modèles représentant ladite même grandeur physique pour délivrer n signaux de mesure, une unité de fusion des n signaux de mesure pour fournir un signal de sortie multiplexé unique composé des n signaux de mesure et un filtre UKF reconditionné recevant ledit signal de sortie multiplexé et configuré pour fournir en sortie un signal constituant la meilleure estimation de la mesure de ladite grandeur physique en ayant rejeté les signaux traduisant un défaut de capteur caractérisé en ce que le filtre UKF est reconditionné en ce qu'il est apte à déterminer si une information de signal de mesure peut être considérée comme étant acceptable et si ce n'est pas le cas provoquer un recalage de l'information de signal de mesure prenant au moins en partie en compte la valeur de prédiction et si c'est le cas, provoquer un recalage par rapport à ladite information de signal de mesure et permettre une mise à jour du filtre UKF reconditionné.

Le système selon l'invention permet ainsi de fusionner des données provenant de différents capteurs, puis de les traiter pour évaluer une mesure pertinente nettoyée de toute erreur. Ceci est réalisé à l'aide du multiplexage simple des données , puis par l'envoi d'un signal de sortie unique de fusion des signaux de mesure délivrés par les capteurs à un filtre UKF (« Unscented Kalman Filter » ou « Filtre de Kalman non parfumé ») reconditionné pour évaluer la meilleure estimée possible et ainsi avoir une mesure qui n'est pas entachée d'erreur.

Selon un mode de réalisation particulier, l'unité de fusion comprend un compteur du nombre n desdits capteurs, un ensemble de n modules de fonctions de conversion de grandeur électrique en grandeur physique associées respectivement à chacun des n capteurs et adaptées pour enregistrer les informations desdits n signaux de mesure, un ensemble de n unités de blocage d'ordre zéro et une unité de multiplexage adaptée pour sélectionner les signaux de mesure individuels des différents capteurs les uns à la suite des autres et fournir à l'entrée du filtre UKF reconditionné un seul flux de données comprenant toutes les informations des n signaux de mesure.

Selon une caractéristique préférentielle, le filtre UKF reconditionné a une vitesse de traitement au moins égale à celle de l'unité de fusion intégrant ladite unité de multiplexage.

Selon un mode de réalisation particulier, le filtre UKF reconditionné comprend une unité de filtrage non linéaire représentant la dynamique de variation de sortie de l'unité de multiplexage.

Dans ce cas, selon un aspect particulier de l'invention, le filtre UKF reconditionné comprend une unité de test adaptée pour déterminer à chaque pas de l'unité de multiplexage si une information de signal de mesure correspond ou non à une valeur inférieure ou égale à une valeur de prédiction de l'unité de filtrage diminuée d'une amplitude de variation acceptable ou à une valeur supérieure à ladite valeur de prédiction augmentée d'une amplitude de variation acceptable, et si c'est le cas, pour provoquer un recalage de l'information de signal de mesure par rapport à la valeur de prédiction et si ce n'est pas le cas, pour provoquer un recalage par rapport à ladite information de signal de mesure et permettre une mise à jour du filtre UKF reconditionné.

L'invention concerne également un procédé de mesure d'une même grandeur physique à partir d'un ensemble de n capteurs redondants ou de modèles représentant ladite même grandeur physique délivrant n signaux de mesure, caractérisé en ce qu'il comprend au moins les étapes consistant à multiplexer les n signaux de mesure pour fournir un signal de sortie multiplexé unique de fusion des n signaux de mesure et filtrer par un filtrage UKF reconditionné ledit signal de sortie multiplexé pour fournir en sortie un signal constituant la meilleure estimation de la mesure de ladite grandeur physique en ayant rejeté les signaux traduisant un défaut de capteur caractérisé en ce que le filtre UKF est reconditionné en ce qu'il est apte à déterminer si une information de signal de mesure peut être considérée comme étant acceptable et si ce n'est pas le cas provoquer un recalage de l'information de signal de mesure prenant au moins en partie en compte la valeur de prédiction et si c'est le cas, provoquer un recalage par rapport à ladite information de signal de mesure et permettre une mise à jour du filtre UKF reconditionné.

Selon une caractéristique particulière, l'étape de filtrage UKF reconditionné est effectuée avec une vitesse de traitement au moins égale à celle de l'étape de multiplexage.

Avantageusement, l'étape de filtrage UKF reconditionné comprend un filtrage non linéaire représentant la dynamique de variation de sortie d'une opération de commutation de sortie de l'étape de multiplexage.

Selon une caractéristique préférentielle, l'étape de filtrage UKF reconditionné comprend un test pour déterminer à chaque pas de l'opération de commutation si une information de signal de mesure correspond ou non à une valeur inférieure ou égale à une valeur de prédiction de l'étape de filtrage diminuée d'une amplitude de variation acceptable ou à une valeur supérieure à ladite valeur de prédiction augmentée d'une amplitude de variation acceptable, et si c'est le cas, pour provoquer un recalage de l'information de signal de mesure par rapport à la valeur de prédiction et si ce n'est pas le cas, pour provoquer un recalage par rapport à ladite information de signal de mesure et permettre une mise à jour de l'étape de filtrage UKF reconditionné.

Brève description des dessins

D'autres caractéristiques et avantages de l'invention ressortiront de la description suivante de modes particuliers de réalisation, donnés à titre d'exemples non limitatifs en référence aux dessins annexés, sur lesquels :

- la figure 1 est une vue schématique d'un moteur de fusée et de son système de commande;
- la figure 2 représente un schéma-bloc des modules comprenant les composants logiciels mis en oeuvre dans le système ou dans le procédé de mesure selon l'invention ;
- la figure 3 est une vue plus détaillée d'une unité de fusion intégrant une unité de multiplexage pouvant être incorporée dans le système de mesure de la figure 2.
- la figure 4 est un diagramme représentant la relation de calcul du paramètre Coef utilisé au niveau de la figure 6 lors de l'évaluation des signaux de mesure,
- la figure 5 est un organigramme résumant les étapes de multiplexage des données et de traitement des données dans le procédé de mesure selon l'invention, selon lequel on procède à une détection et à une correction des éventuelles anomalies des signaux de mesure,
- la figure 6 est un organigramme représentant un diagramme de transition pour la pondération des signaux selon la distance des échantillons successifs n et n-1,
- la figure 7 est un diagramme montrant un processus d'évolution des fenêtres de tolérance,
- la figure 8A représente un premier exemple de résultats de drapeau de détection,
- la figure 8B représente, pour ce premier exemple de résultats de drapeau de détection, les signaux bruts mutiplexés ainsi que le signal filtré en sortie,
- la figure 9A représente un deuxième exemple de résultats de drapeau de détection,
- la figure 9B représente, pour ce deuxième exemple de résultats de drapeau de détection, les signaux bruts mutiplexés ainsi que le signal filtré en sortie,
- la figure 10A représente un troisième exemple de résultats de drapeau de détection, et
- la figure 10B représente, pour ce troisième exemple de résultats de drapeau de détection, les signaux bruts mutiplexés ainsi que le signal filtré en sortie,

Description détaillée de modes particuliers de réalisation

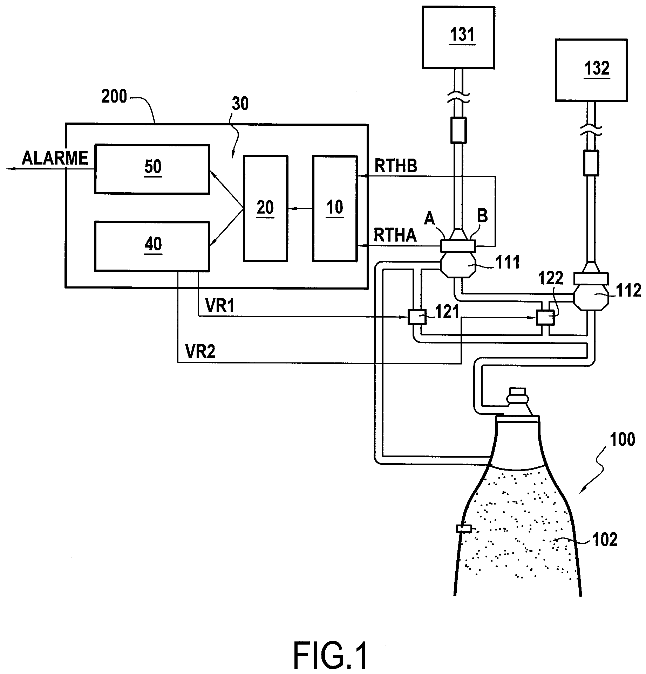

On a représenté sur la figure 1 un moteur-fusée 100 comportant une tuyère 102, alimentée par deux réservoirs d'ergols 131 et 132, chacun étant situé en amont d'une pompe 111, 112.

Le débit de chacun de ces ergols peut être régulé par des vannes 121, 122 disposées entre les pompes 111, 112 et la tuyère 102.

Le débit de chacun de ces ergols est mesuré immédiatement en amont de chacune des pompes 111, 112.

Dans l'exemple d'application décrit, par souci de simplicité pour les explications, seules deux mesures sont fusionnées, mais le nombre de mesures fusionnées peut être bien supérieur à deux.

Deux capteurs A et B sont disposés sur la pompe 111 et mesurent la vitesse de rotation de celle-ci. Ces capteurs fournissent deux mesures indépendantes l'une de l'autre, RTHA et RTHB, représentatives de la vitesse de la pompe 111.

Le moteur 100 comporte un contrôleur 200 lui-même composé d'une unité 40 de régulation et d'une unité 50 de surveillance. Les unités 40 et 50 reçoivent les informations consolidées par l'unité 20 de filtrage de la mesure.

L'unité de filtrage 20 reçoit les informations RTHA et RTHB conditionnées et multiplexées par un module de fusion 10.

En utilisant l'information consolidée par les étapes assurées par le module de fusion 10 puis l'unité de filtrage 20, l'unité de régulation 40 est à même de réguler le fonctionnement du moteur 100, en transmettant des consignes VR1 et VR2 d'ouverture/fermeture aux vannes 121, 122 d'alimentation du moteur 100. Pour la même raison l'unité de surveillance 50 est à même d'alerter de façon fiable d'une sur-vitesse de rotation de la pompe 111.

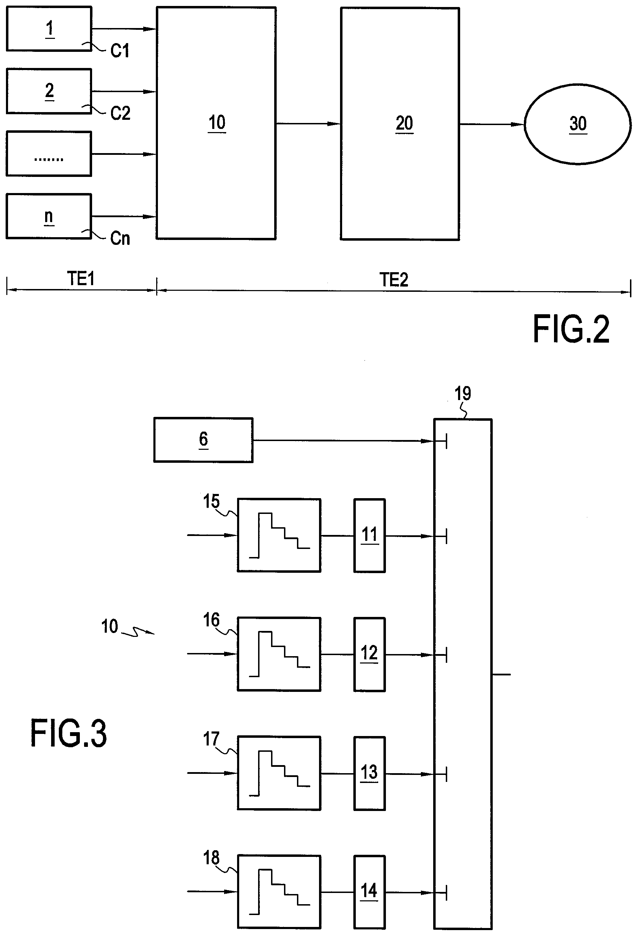

Le principe de l'invention est illustré sur le schéma-bloc de la figure 2.

Le système selon l'invention comprend un ensemble de n capteurs C1, C2,..., Cn redondants ou de modèles représentant la même grandeur physique. A titre d'exemple, on a montré sur les dessins un ensemble de quatre capteurs C1 à Cn, mais le nombre n peut également être constitué par n'importe quel autre nombre entier différent de quatre.

Si l'on considère la phase d'acquisition des données fournies par les n capteurs C1 à Cn, on a un temps d'échantillonnage TE1 égal à N millisecondes.

Le système selon l'invention comprend une première unité de fusion 10 intégrant une fonction de multiplexage 19 qui permet le multiplexage des données provenant des capteurs C1 à Cn et précédemment converties en grandeurs physiques par les fonctions de conversion des unités 11 à 14 (figure 3) pour délivrer en sortie une seule donnée comprenant toutes les données précédentes y compris les erreurs et les données fournies par les capteurs hors service.

La sortie de l'unité de fusion 10 est reliée à l'entrée d'une unité de filtrage 20 comprenant un filtre de Kalman dit « non parfumé » (UKF) reconditionné pour permettre d'estimer la meilleure mesure de tous les capteurs en rejetant les anomalies par un recalage spécifique. On obtient ainsi en sortie de l'unité de filtrage 20 un signal 30 constituant la meilleure estimée de la mesure.

Le traitement au sein des unités 10 et 20 correspond à un temps d'échantillonnage TE2 égal à TE1 divisé par le nombre n de capteurs.

La figure 3 montre un exemple de réalisation de l'unité de fusion 10.

Dans cet exemple, l'unité de fusion 10 comprend un compteur 6 du nombre n de capteurs C1 à Cn, un ensemble de n unités 11 à 14 mettant en oeuvre des fonctions de conversion associées respectivement à chacun des n capteurs C1 à Cn et adaptées pour enregistrer les informations des n signaux de mesure et un ensemble de n unités de blocage d'ordre zéro 15 à 18. par ailleurs, dans l'unité de fusion 10, une unité de multiplexage 19 est adaptée pour sélectionner les signaux de mesure individuels des différents capteurs C1 à Cn les uns à la suite des autres et fournir à l'entrée du filtre UKF reconditionné 20 un seul flux de données comprenant toutes les informations des n signaux de mesure.

L'unité de multiplexage 19 est cadencée à un temps d'échantillonnage TE2 qui correspond au temps d'échantillonnage TE1 de l'acquisition des différents capteurs C1 à Cn divisé par le nombre n de capteurs C1 à Cn.

L'unité de multiplexage 19 permet ainsi de sélectionner les mesures des différents capteurs C1, C2,..., Cn les unes à la suite des autres et d'obtenir un seul flux de données comprenant toutes les mesures. Pour sélectionner toutes les mesures les unes à la suite des autres, on peut utiliser un simple compteur 6 qui part de 1 et va jusqu'au nombre de capteurs présents. Cette opération se répète tout au long d'une évaluation.

On décrira maintenant un exemple de réalisation de l'unité de filtrage 20 de la figure 2 qui met en oeuvre un filtre UKF reconditionné.

Il est tout d'abord à noter que des informations sur les filtres de Kalman « non parfumés » (UKF) peuvent être trouvées dans le chapitre 7 intitulé « The Unscented Kalman Filter » par Eric Wan et Rudolph van der Merwe tiré de l'ouvrage intitulé « Kalman Filtering and Neural Networks », publié par Simon Haykin chez John Wiley & Sons, Inc en 2001.

L'unité de filtrage 20 constituée par un UKF reconditionné permet d'estimer la grandeur physique mesurée par les capteurs C1 à Cn en rejetant les anomalies de type bruit ou biais par un recalage spécifique. De plus les bruits naturels résultant de la fusion des mesures des capteurs peuvent être diminués à l'aide d'un filtre spécifique inséré dans l'unité de filtrage 20.

Dans l'unité de filtrage 20, l'UKF est utilisé avec un filtre représentant la dynamique possible de variation du système physique mesuré. Ce filtre est non-linéaire car intégrant des saturations en vitesse de variation représentatives de la plausibilité de variation du signal de mesure de capteur filtré. Cependant, il doit rejeter les valeurs qui semblent aberrantes (biais, capteur hors service,...). En effet, le flux unique à l'entrée de l'unité de filtrage 20 comprend aussi bien l'information utile non biaisée que les biais des capteurs, notamment tous les N pas de l'unité de commutation 19 si le biais n'est présent que sur l'un des capteurs. Le code de l'UKF traditionnel comporte donc ici une condition supplémentaire qui permet un recalage sélectif de la manière suivante :

- Soit on considère que le signal d'entrée n'est pas (à une marge de variation près) acceptable et on le rejette en utilisant l'étape de prédiction de l'UKF (module 221) pour remplacer le signal d'entrée dans l'étape de recalage de l'UKF (module 222). La prédiction est ici représentative du modèle inséré et est elle-même considérée comme bonne et non entachée de biais ;

- Soit on considère que le signal d'entrée est bon et alors le recalage s'effectue normalement avec le signal d'entrée et l'étape de mise à jour de l'UKF.

Le code de la condition additionnelle rajoutée à la fin du code de l'UKF peut se résumer de la façon suivante :

```
SI (signal_entrée <= Prédiction -variation) (test 224)
OU (signal_entrée > Prédiction + variation) (test 224)
ALORS Recalage par rapport à la prédiction du filtre (module 226)
SINON Recalage par rapport au signal d'entrée (module 227)
FIN
```

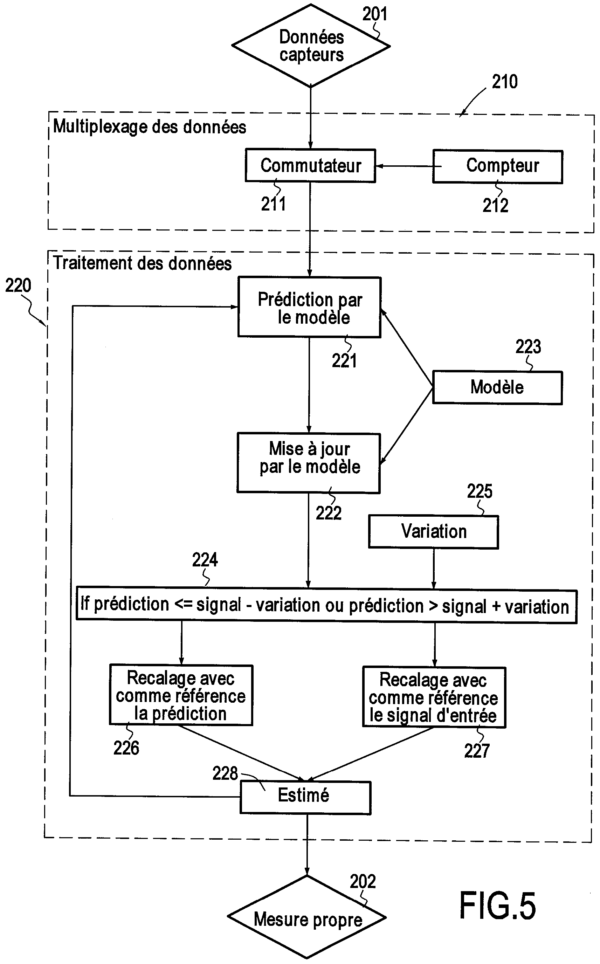

La solution de détection et correction d'anomalie est représentée par l'organigramme de la figure 5.

Un module 210 de multiplexage des données comprend un commutateur 211 associé à un compteur 212 et recevant des données de capteurs fournies dans une étape 201.

Un module 220 de traitement des données comprend un module 223 définissant un modèle, un module 221 de prédiction par le modèle qui reçoit les données de capteurs par l'intermédiaire du commutateur 211 et un module 222 de mise à jour par le modèle qui reçoit des données du module 223 et du module 221.

Le module 220 de traitement de données comprend également un module 225 dans lequel on enregistre une variation de signal et un test 224 selon lequel :

i) si la prédiction déterminée dans le module 221 et mise à jour par le modèle est inférieure ou égale au signal diminué de la variation, ou

ii) si la prédiction déterminée dans le module 221 et mise à jour par le modèle est supérieure au signal augmenté de la variation,

alors dans un module 226 on procède à un recalage avec comme référence la prédiction,

sinon dans un module 227 on procède à un recalage avec comme référence le signal d'entrée.

La sortie du module 226 ou du module 227 constitue une unité 228 de stockage d'une valeur estimée qui est elle-même renvoyée au module 221 de prédiction par le modèle et appliquée en sortie à une unité 202 de fourniture d'une mesure propre.

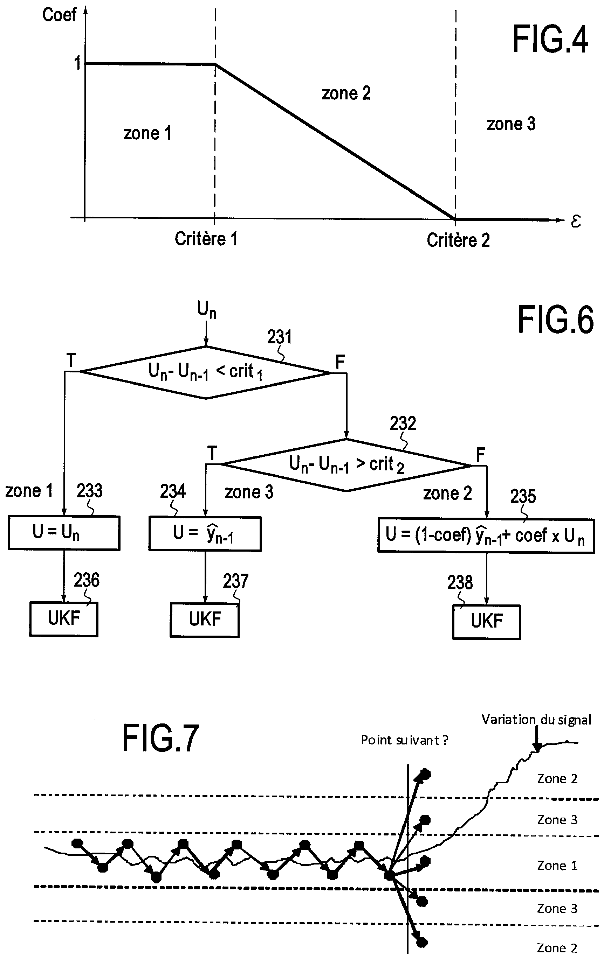

Une seconde solution, illustrée sur l'organigramme de la figure 6, consiste à utiliser les capacités d'estimation de l'UKF et à les combiner à un algorithme basé sur une pondération associée aux tuyaux d'incertitudes, afin de signaler au filtre le caractère aberrant ou non du signal à l'instant courant.

Différentes zones de tolérances sont estimées en utilisant le caractère toléré de niveau de bruit ou de variation entre deux points d'acquisition successifs.

La figure 4 montre l'évolution d'un coefficient en fonction d'une valeur « epsilon » qui représente la différence entre la valeur du signal à l'instant courant et sa valeur à l'instant précédent.

La figure 4 montre trois cas de figure différents définissant trois zones du diagramme :

- Zone 1 : zone pour laquelle le point est jugé « correct » (le coefficient est égal à 1)
- Zone 2 : zone « limite » (après un critère 1, le coefficient diminue de 1 à 0)
- Zone 3 : zone pour laquelle le point sera considéré comme « aberrant » (après un critère 2, le coefficient est égal à 0)

La prise en compte du point se fait sur la base de sa localisation dans la fenêtre statistique avec une pondération selon la formule :

$$u^* = (1 - coef) \times \hat{y}_{i-1} + coef \times u_i$$

Ce principe peut être représenté par le diagramme de transitions représenté en figure 6.

Le principe est le suivant : on compare la valeur du signal courant $U_n$ (instant courant « n ») avec sa valeur à l'instant précédent (n-1) $U_{n-1}$ par rapport à un premier critère crit1 (étape 231) :

- Si la résultante est inférieure au critère 1 alors le signal courant est pris en compte pour l'estimation suivante (instant « n+1 »). Ceci correspond à la zone n°1, et le coefficient de pondération vaut 1 (étapes 233 puis 236 pour l'UKF).

- Si la résultante est supérieure au critère 1, alors on teste le critère 2 (étape 232) pour savoir si $U_n$ - $U_{n-1}$ est supérieur au deuxième critère crit2. Si la résultante est supérieure à crit2, c'est l'estimation précédente qui est prise en compte pour le calcul de l'estimation suivante. Nous sommes dans la zone n°3, et le coefficient de pondération vaut 0 (étapes 234 puis 237 pour l'UKF).

courant et l'estimation précédente. On se trouve alors dans la zone n°2 (étape 235) et le coefficient de pondération varie suivant une loi affine représentée par la formule ci-dessous :

$$coef = -\frac{1}{crit_1 - crit_2} \times \varepsilon + \frac{crit_2}{crit_2 - crit_1}$$

On indique ci-dessous comment les critères 1 et 2 sont déterminés :

- Le critère 1 est le reflet de l'incertitude admissible théorique souhaitée, il est prédéfini :

$$\text{critère 1} = \text{marge} \times \sqrt{\sigma_1^2 + \sigma_2^2}$$

Avec :

   ◦ Marge = 3 (marge de sécurité), représentant 99,7% de probabilité.
   ◦ $\sigma_1$ et $\sigma_2$ les écart-types sur les capteurs 1 et 2 successifs.
   ◦ Deux possibilités existent : soit les écart-types sont parfaitement connus et dans ce cas il suffit d'entrer les valeurs connues. Soit ils ne le sont pas et dans ce cas on peut utiliser les capacités de l'UKF à estimer la variance (et donc l'écart-type).

Il est à noter que le critère 1 englobe les biais ainsi que les bruits appliqués à deux capteurs successifs.

- Le critère 2 intègre la vitesse de divergence du signal possible et admissible (de par la nature du système commandé, sa vitesse de variation propre, principalement dictée par la vitesse de commutation des différentes vannes), et par conséquent la variation « possible » du point de fonctionnement du système :

$$\text{critère 2} = \text{marge} \times \sqrt{\sigma_{vit}^2 + \sigma_1^2 + \sigma_2^2}$$

Avec :

   ◦ $\sigma_{vit}$ : transformée de la vitesse, qui est une loi uniforme, en une loi normale afin de pouvoir l'ajouter à l'incertitude précédemment estimée par l'UKF. La transformation de la vitesse en une loi normale s'effectue de la manière suivante :

$$\sigma_{vit}^2 = -\frac{(2 \times vitesse_{max})^2}{12}$$

Le processus d'évolution des fenêtres de tolérance est représenté par la figure 7 où l'on voit trois zones différentes pour la situation des points de mesure successifs.
Un drapeau de détection indique dans quelle zone on se trouve :

- Drapeau à 0 : pas de biais détecté, l'estimation se fait sur la base du signal courant.
- Drapeau à 1 : biais intermédiaire détecté, l'estimation se fait sur la pondération.
- Drapeau à 2 : biais excessif détecté, l'estimation se fait sur l'estimée précédente.

On peut également noter que l'algorithme correspondant à la saturation en vitesse n'est plus utile ici. En effet, la non-linéarité du modèle est maintenant assurée par la variable epsilon et les tests sur les critères 1 et 2.

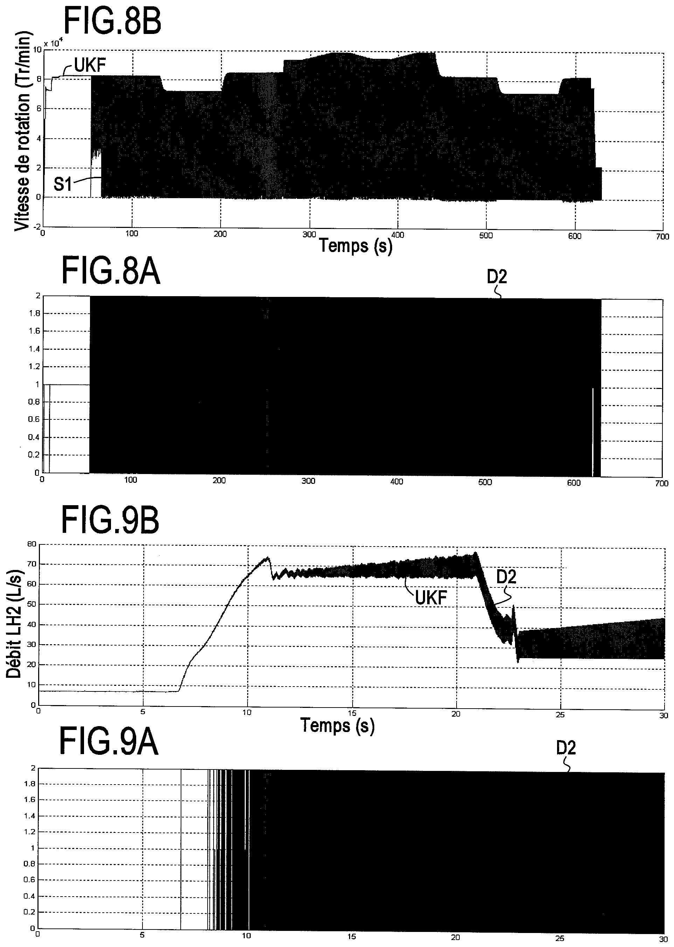

La figure 8A montre un exemple de drapeau de détection D1 pour un système de mesure de la vitesse de rotation d'une turbopompe d'alimentation en hydrogène liquide d'un moteur-fusée.

La figure 8B montre la forme d'un signal S1 et de la sortie UKF pour l'exemple de système de mesure correspondant à la figure 1,

La figure 9A montre un exemple de drapeau de détection D2 pour un système de mesure du débit d'une turbopompe d'alimentation en hydrogène liquide d'un moteur-fusée.

La figure 9B montre la forme d'un signal réel S2 et de la sortie UKF,

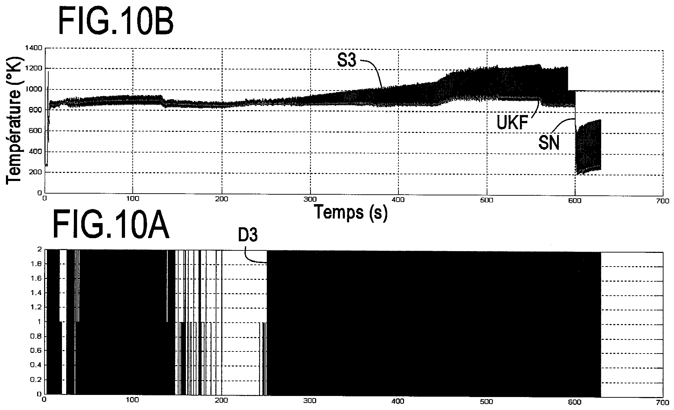

La figure 10A montre un exemple de drapeau de détection D3 pour un système de mesure de température au sein d'un moteur-fusée.

La figure 10B montre la forme d'un signal réel S3, de la sortie UKF et d'un signal nominal SN.

En résumé, on peut souligner que le système selon l'invention se distingue en particulier par la mise en oeuvre d'une unité de multiplexage 19 permettant de prendre à tour de rôle les mesures provenant des capteurs C1 à Cn et d'assimiler le signal entrant dans l'unité de filtrage 20 comme une information unique.

L'invention se caractérise également par la mise en oeuvre d'un modèle non-linéaire pour le modèle de variation de la mesure.

Le procédé et le système selon l'invention sont également remarquables en ce que l'on effectue un recalage conditionné intégré dans le code de l'UKF pour permettre le rejet des valeurs aberrantes et obtenir la meilleure estimation de la mesure de tous les capteurs C1 à Cn.

Les différents modules du système de mesure des figures 2 et 3 et les étapes du procédé de mesure définies en référence aux figures 5 et 6 peuvent être réalisés à l'aide d'un ordinateur comprenant un ou plusieurs processeurs de traitement ainsi que des unités de mémoire.

## Revendications

1. Système de mesure à capteurs multiples d'une même grandeur physique, lequel comprend au moins un ensemble de n capteurs (C1, C2,..., Cn) redondants ou de modèles représentant ladite même grandeur physique pour délivrer n signaux de mesure, une unité (10) de fusion des n signaux de mesure pour fournir un signal de sortie multiplexé unique composé des n signaux de mesure et un filtre UKF reconditionné (20) pour évaluer la meilleure estimée possible recevant ledit signal de sortie multiplexé et configuré pour fournir en sortie un signal constituant la meilleure estimation de la mesure de ladite grandeur physique en ayant rejeté les signaux traduisant un défaut de capteur, **caractérisé en ce que** le filtre UKF est reconditionné **en ce qu'**il est apte à déterminer si une information de signal de mesure peut être considérée comme étant acceptable et si ce n'est pas le cas provoquer un recalage de l'information de signal de mesure prenant au moins en partie en compte la valeur de prédiction et si c'est le cas, provoquer un recalage par rapport à ladite information de signal de mesure et permettre une mise à jour du filtre UKF reconditionné.

2. Système selon la revendication 1, **caractérisé en ce que** l'unité (10) de fusion comprend un compteur (6) du nombre n desdits capteurs (C1, C2,..., Cn), un ensemble de n modules de fonctions de conversion (11 à 14) de grandeur électrique en grandeur physique associées respectivement à chacun des n capteurs (C1, C2,..., Cn) et adaptées pour enregistrer les informations desdits n signaux de mesure, un ensemble de n unités de blocage d'ordre zéro (15 à 18) et une unité de multiplexage (19) adaptée pour sélectionner les signaux de mesure individuels des différents capteurs (C1, C2,..., Cn) les uns à la suite des autres et fournir à l'entrée du filtre UKF reconditionné (20) un seul flux de données comprenant toutes les informations des n signaux de mesure.

3. Système selon la revendication 1 ou la revendication 2, **caractérisé en ce que** le filtre UKF reconditionné (20) a une vitesse de traitement au moins égale à celle de l'unité de fusion (10) intégrant ladite unité de multiplexage (19).

4. Système selon l'une quelconque des revendications 1 à 3, **caractérisé en ce que** le filtre UKF reconditionné (20) comprend une unité de filtrage non linéaire représentant la dynamique de variation de sortie de l'unité de multiplexage (19).

5. Système selon la revendication 4, **caractérisé en ce que** le filtre UKF reconditionné (20) comprend une unité de test adaptée pour déterminer à chaque pas de l'unité de multiplexage (19) si une information de signal de mesure correspond ou non à une valeur inférieure ou égale à une valeur de prédiction de l'unité de filtrage diminuée d'une amplitude de variation acceptable ou à une valeur supérieure à ladite valeur de prédiction augmentée d'une amplitude de variation acceptable, et si c'est le cas, pour provoquer un recalage de l'information de signal de mesure par rapport à la valeur de prédiction et si ce n'est pas le cas, pour provoquer un recalage par rapport à ladite information de signal de mesure et permettre une mise à jour du filtre UKF reconditionné (20).

**6.** Procédé de mesure d'une même grandeur physique à partir d'un ensemble de n capteurs (C1, C2,..., Cn) redondants ou de modèles représentant ladite même grandeur physique délivrant n signaux de mesure, lequel comprend au moins les étapes consistant à multiplexer les n signaux de mesure pour fournir un signal de sortie multiplexé unique de fusion des n signaux de mesure et filtrer par un filtrage UKF reconditionné pour évaluer la meilleure estimée possible ledit signal de sortie multiplexé pour fournir en sortie un signal constituant la meilleure estimation de la mesure de ladite grandeur physique en ayant rejeté les signaux traduisant un défaut de capteur, **caractérisé en ce que** le filtre UKF est reconditionné **en ce qu'**il est apte à déterminer si une information de signal de mesure peut être considérée comme étant acceptable et si ce n'est pas le cas provoquer un recalage de l'information de signal de mesure prenant au moins en partie en compte la valeur de prédiction et si c'est le cas, provoquer un recalage par rapport à ladite information de signal de mesure et permettre une mise à jour du filtre UKF reconditionné.

**7.** Procédé selon la revendication 6, **caractérisé en ce que** l'étape de filtrage UKF reconditionné est effectuée avec une vitesse de traitement au moins égale à celle de l'étape de multiplexage.

**8.** Procédé selon la revendication 6 ou la revendication 7, **caractérisé en ce que** l'étape de filtrage UKF reconditionné comprend un filtrage non linéaire représentant la dynamique de variation de sortie d'une opération de commutation de sortie de l'étape de multiplexage.

**9.** Procédé selon la revendication 8, **caractérisé en ce que** l'étape de filtrage UKF reconditionné comprend un test pour déterminer à chaque pas de l'opération de commutation si une information de signal de mesure correspond ou non à une valeur inférieure ou égale à une valeur de prédiction de l'étape de filtrage diminuée d'une amplitude de variation acceptable ou à une valeur supérieure à ladite valeur de prédiction augmentée d'une amplitude de variation acceptable, et si c'est le cas, pour provoquer un recalage de l'information de signal de mesure par rapport à la valeur de prédiction et si ce n'est pas le cas, pour provoquer un recalage par rapport à ladite information de signal de mesure et permettre une mise à jour de l'étape de filtrage UKF reconditionné.

**Patentansprüche**

**1.** Multisensor-System zum Messen einer gleichen physikalischen Größe, das wenigstens eine Anordnung von n redundanten Sensoren (C1, C2,..., Cn) oder von Modellen, die die gleiche physikalische Größe darstellen, um n Messsignale zu liefern, eine Einheit (10) zum Zusammenführen der n Messsignale, um ein einziges gemultiplextes Ausgangssignal, welches aus n Messignalen besteht, zu liefern, und ein rekonditionniertes UKF-Filter (20) zum Auswerten des bestmöglichen Schätzwertes umfasst, das das gemultiplexte Ausgangssignal empfängt und dazu ausgebildet ist, ausgangseitig ein Signal zu liefern, welches die beste Schätzung der Messung der physikalischen Größe darstellt, und dabei die einen Sensorfehler zum Ausdruck bringenden Signale verworfen hat, **dadurch gekennzeichnet, dass** das UKF-Filter dadurch rekonditioniert ist, dass es geeignet ist, zu bestimmen, ob eine Messsignal-Information als akzeptabel betrachtet werden kann, und, falls dies nicht der Fall ist, eine Rückstellung der Messsignal-Information zu bewirken, die wenigstens teilweise den Vorhersagewert berücksichtigt, und, falls dies der Fall ist, eine Rückstellung in Bezug auf die Messsignal-Information zu bewirken und eine Aktualisierung des rekonditionierten UKF-Filters zu ermöglichen.

**2.** System nach Anspruch 1, **dadurch gekennzeichnet, dass** die Zusammenführungseinheit (10) einen Zähler (6) für die Anzahl n der Sensoren (C1, C2, ..., Cn), eine Menge von n Modulen von Funktionen zur Umwandlung (11 bis 14) einer elektrischen Größe in eine physikalische Größe, die jeweils jedem der n Sensoren (C1, C2, ..., Cn) zugeordnet und dazu ausgelegt sind, die Informationen der n Messsignale zu speichern, eine Menge von n Blockierungseinheiten nullter Ordnung (15 bis 18) und eine Multiplexeinheit (19) umfasst, die dazu ausgelegt ist, die einzelnen Messsignale der verschiedenen Sensoren (C1, C2, ..., Cn) nacheinander auszuwählen und an den Eingang des rekonditionierten UKF-Filters (20) einen einzigen Datenstrom, der alle Informationen der n Messsignale enthält, zu liefern.

**3.** System nach Anspruch 1 oder Anspruch 2, **dadurch gekennzeichnet, dass** das rekonditionierte UKF-Filter (20) eine Verarbeitungsgeschwindigkeit aufweist, die wenigstens gleich derjenigen der die Multiplexeinheit (19) integrierenden Zusammenführungseinheit (10) ist.

**4.** System nach einem der Ansprüche 1 bis 3, **dadurch gekennzeichnet, dass** das rekonditionierte UKF-Filter (20) eine nichtlineare Filtereinheit umfasst, die die Ausgangsänderungsdynamik der Multiplexeinheit (19) darstellt.

5. System nach Anspruch 4, **dadurch gekennzeichnet, dass** das rekonditionierte UKF-Filter (20) eine Testeinheit umfasst, die dazu ausgelegt ist, bei jedem Schritt der Multiplexeinheit (19) zu bestimmen, ob eine Messsignal-Information einem Wert, welcher kleiner als oder gleich ein(em) Vorhersagewert der Filtereinheit ist, verringert um eine akzeptable Änderungsamplitude, oder einem Wert, welcher größer als der Vorhersagewert ist, erhöht um eine akzeptable Änderungsamplitude, entspricht oder nicht, und, falls dies der Fall ist, eine Rückstellung der Messsignal-Information in Bezug auf den Vorhersagewert zu bewirken, und, falls dies nicht der Fall ist, eine Rückstellung in Bezug auf die Messsignal-Information zu bewirken und eine Aktualisierung des rekonditionierten UKF-Filters (20) zu ermöglichen.

6. Verfahren zur Messung einer gleichen physikalischen Größe mittels einer Anordnung von n redundanten Sensoren (C1, C2,..., Cn) oder von Modellen, die die gleiche physikalische Größe darstellen, die n Messsignale liefern, welches wenigstens die Schritte umfasst, die darin bestehen, die n Messsignale zu multiplexen, um ein einziges gemultiplextes Ausgangssignal einer Zusammenführung der n Messignale zu liefern, und durch eine rekonditionnierte UKF-Filterung zum Auswerten des bestmöglichen Schätzwertes das gemultiplexte Ausgangssignal zu filtern, um ausgangseitig ein Signal zu liefern, welches die beste Schätzung der Messung der physikalischen Größe darstellt, unter Verwerfen der einen Sensorfehler zum Ausdruck bringenden Signale, **dadurch gekennzeichnet, dass** das UKF-Filter dadurch rekonditioniert ist, dass es geeignet ist, zu bestimmen, ob eine Messsignal-Information als akzeptabel betrachtet werden kann, und, falls dies nicht der Fall ist, eine Rückstellung der Messsignal-Information zu bewirken, die wenigstens teilweise den Vorhersagewert berücksichtigt, und, falls dies der Fall ist, eine Rückstellung in Bezug auf die Messsignal-Information zu bewirken und eine Aktualisierung des rekonditionierten UKF-Filters zu ermöglichen.

7. Verfahren nach Anspruch 6, **dadurch gekennzeichnet, dass** der Schritt der rekonditionierten UKF-Filterung mit einer Verarbeitungsgeschwindigkeit durchgeführt wird, die wenigstens gleich derjenigen des Multiplexschrittes ist.

8. Verfahren nach Anspruch 6 oder Anspruch 7, **dadurch gekennzeichnet, dass** der Schritt der rekonditionierten UKF-Filterung eine nichtlineare Filterung umfasst, welche die Ausgangsänderungsdynamik eines Ausgangsumschaltvorganges des Multiplexschrittes darstellt.

9. Verfahren nach Anspruch 8, **dadurch gekennzeichnet, dass** der Schritt der rekonditionierten UKF-Filterung einen Test umfasst, um bei jedem Schritt des Umschaltvorganges zu bestimmen, ob eine Messsignal-Information einem Wert, welcher kleiner als oder gleich ein(em) Vorhersagewert des Filterungsschrittes ist, verringert um eine akzeptable Änderungsamplitude, oder einem Wert, welcher größer als der Vorhersagewert ist, erhöht um eine akzeptable Änderungsamplitude, entspricht oder nicht, und, falls dies der Fall ist, eine Rückstellung der Messsignal-Information in Bezug auf den Vorhersagewert zu bewirken, und, falls dies nicht der Fall ist, eine Rückstellung in Bezug auf die Messsignal-Information zu bewirken und eine Aktualisierung des rekonditionierten UKF-Filterungsschrittes zu ermöglichen.

**Claims**

1. A measurement system having multiple sensors for sensing the same physical magnitude, the system comprising at least one set of n redundant sensors (C1, C2, ..., Cn) or of models representing said same physical magnitude in order to deliver n measurement signals, a fusion unit (10) for fusing the n measurement signals in order to deliver a single multiplexed output signal made up of the n measurement signals, and a reconditioned unscented Kalman filter (UKF) (20) receiving said multiplexed output signal and configured to output a signal constituting the best estimate of the measurement of said physical magnitude after rejecting signals representative of a sensor failure, the system being **characterized in that** the UKF filter is reconditioned **in that** it is able to determine if an information of the measurement signal can be considered as acceptable and if not, cause a resetting of the information of the measurement signal taking at least partly account for the prediction value and if so, cause a registration with respect to said information of the measurement signal and allow updating of the reconditioned UKF filter.

2. A system according to claim 1, **characterized in that** the fusion unit (10) comprises a counter (6) for counting the number n of said sensors (C1, C2, ..., Cn), a set of n conversion function modules (11 to 14) for converting an electrical magnitude into a physical magnitude, the modules being respectively associated with each of the n sensors (C1, C2, ..., Cn) and adapted to store the information from said n measurement signals, a set of n zero-order blocking units (15 to 18), and a multiplexer unit (19) adapted to select the individual measurement signals from the various sensors (C1, C2, ..., Cn) one after another and to deliver to the input of the reconditioned UKF (20) a single data stream comprising all of the information from the $n$ measurement signals.

3. A system according to claim 1 or claim 2, **characterized in that** the reconditioned UKF (20) processes at a speed not less than that of the fusion unit (10) incorporating said multiplexer unit (19).

4. A system according to any one of claims 1 to 3, **characterized in that** the reconditioned UKF (20) includes a non-linear filter unit representing the dynamics of variation in the input from the multiplexer unit (19).

5. A system according to claim 4, **characterized in that** the reconditioned UKF (20) includes a test unit adapted to determine on each step of the multiplexer unit (19) whether measurement signal information does or does not correspond to a value less than or equal to a prediction value of the filter unit minus an acceptable amplitude of variation or to a value greater than said prediction value plus an acceptable amplitude of variation, and if so, for causing the measurement signal information to be reset relative to the prediction value, and if not, for causing it to be reset relative to said measurement signal information and enabling the reconditioned UKF (20) to be updated.

6. A method of measuring the same physical magnitude using a set of $n$ redundant sensors (C1, C2, ..., Cn) or of models representing said same physical magnitude delivering $n$ measurement signals, the method comprising at least the steps consisting in multiplexing the $n$ measurement signals in order to deliver a single multiplexed output signal fusing the $n$ measurement signals, and in filtering said multiplexed output signal by a reconditioned unscented Kalman filter (UKF) in order to output a signal containing the best estimate of the measurement of said physical magnitude after rejecting signals representative of a sensor failure, the method being **characterized in that** the UKF filter is reconditioned **in that** it is able to determine if an information of the measurement signal can be considered as acceptable and if not, cause a resetting of the information of the measurement signal taking at least partly account for the prediction value and if so, cause a registration with respect to said information of the measurement signal and allow updating of the reconditioned UKF filter.

7. A method according to claim 6, **characterized in that** the reconditioned UKF filtering step is performed with a processing speed not less than that of the multiplexing step.

8. A method according to claim 6 or claim 7, **characterized in that** the reconditioned UKF filtering step includes non-linear filtering representing the dynamics of variation in the output of a switching operation at the output of the multiplexing step.

9. A method according to claim 8, **characterized in that** the reconditioned UKF filtering step includes a test for determining on each step of the switching operation whether measurement signal information does or does not correspond to a value less than or equal to a prediction value of the filtering step minus an acceptable amplitude of variation or to a value greater than said prediction value plus an acceptable amplitude of variation, and if so, for causing the measurement signal information to be reset relative to the prediction value, and if not, for causing it to reset relative to said measurement signal information and enabling the reconditioned UKF filtering step to be updated.

FIG.1

FIG.2

FIG.3

FIG.4

FIG.6

FIG.7

FIG.5

# FIG.8B

# FIG.8A

# FIG.9B

# FIG.9A

FIG.10B

FIG.10A

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- The Unscented Kalman Filter. **ERIC WAN ; RUDOLPH VAN DER MERWE.** Kalman Filtering and Neural Networks. John Wiley & Sons, Inc, 2001